# EUROPEAN PATENT SPECIFICATION

(11) **EP 2 502 482 B1**
(45) Date of publication and mention of the grant of the patent: **22.05.2013**
(21) Application number: 11425071.5
(22) Date of filing: 23.03.2011
(51) Int. Cl.: A01D 34/00, G05D 1/02

(54) **Apparatus for cutting grass**
Mähvorrichtung
Tondeuse

(43) Date of publication of application: 26.09.2012
(73) Proprietor: Bernini, Fabrizio, 52021 Bucine - Arezzo (IT)
(72) Inventor: Bernini, Fabrizio, 52021 Bucine - Arezzo (IT)
(74) Representative: Tansini, Elio Fabrizio

(56) References cited:
- EP-A1- 1 906 205
- DE-A1-102008 001 813

## Description

The present invention relates to an apparatus for cutting grass.

It is known that automatic lawn mowers are presently designed to operate within predetermined cutting areas. Lawn mowers are used for maintaining lawns, gardens and grassy areas in general in optimal conditions, i.e. maintaining the grass under a given height in a substantially homogeneous manner over the whole cutting area.

Often the cutting area is bounded by a perimetral wire or cable inside which an electric signal is propagated; the lawn mower, by detecting such an electric signal, is able to recognise the limits of the cutting area and consequently adjust its movement and/or cutting activities.

It is known that lawn mowers are provided with a self-contained electric power unit, entrusted with the task of supplying electric energy to the electrical and electro-mechanical devices present within the lawn mower itself, such as the motors designed for movement of the wheels and blades, the electronic circuits dedicated to detection of the presence of grass, detection of the presence of the perimetral cable, processing of the detected data and control of the different motors, etc.

When the power unit typically consisting of a battery or a battery pack, is close to exhaustion, the lawn mower moves to a recharge base, where the power unit can be recharged so as to enable prosecution of the grass cutting activity, after a given lapse of time. Such an arrangement is known from EP-A-1 906 205.

In this context, the present invention aims at making available an apparatus for cutting grass in which the lawn mower is able to move in particularly narrow and difficult to follow passages with agility.

Another aim of the present invention is to provide an apparatus for cutting grass in which the lawn mower can go back to the recharge base in a quick and reliable manner.

A further aim of the invention is to provide an apparatus for cutting grass in which the effect of tracks left by the lawn mower during its travel to the recharge base is minimised.

A still further aim of the invention is to provide an apparatus in which the lawn mower is able to follow a predetermined trajectory in a reliable manner even where a going stretch and a return stretch of the perimetral cable are in the vicinity of each other. The invention also aims at providing an apparatus in which the perimetral cable can be disposed with greater freedom and flexibility, the sizes and shape of the cutting area being the same as in apparatuses of the known art.

Another aim of the invention is to make available an apparatus in which the motor wear is reduced and in general also reduced is the energy consumption for movement of the lawn mower.

A further aim of the invention is to provide an apparatus in which the lawn mower behaviour is improved in the presence of steep slopes.

The foregoing and still further aims are substantially achieved by an apparatus for cutting grass as described in the appended claims.

Further features and advantages will become more apparent from the detailed description of a preferred, but not exclusive, embodiment of the invention.

This description will be set out hereinafter with reference to the accompanying drawings, given by way of non-limiting example, in which:
- Fig. 1 shows a block diagram of an apparatus according to the invention;
- Fig. 2 diagrammatically shows a perspective view of a lawn mower being part of the apparatus according to the present invention;
- Fig. 3 shows a block diagram of a lawn mower being part of the apparatus of the invention;
- Figs. 4a-4b and 5 diagrammatically show movements of a lawn mower being part of the apparatus of the invention;
- Fig. 6 diagrammatically shows details of the lawn mower seen in Fig. 2.
- Fig. 7 diagrammatically shows an operating condition of the lawn mower being part of the apparatus according to the invention.

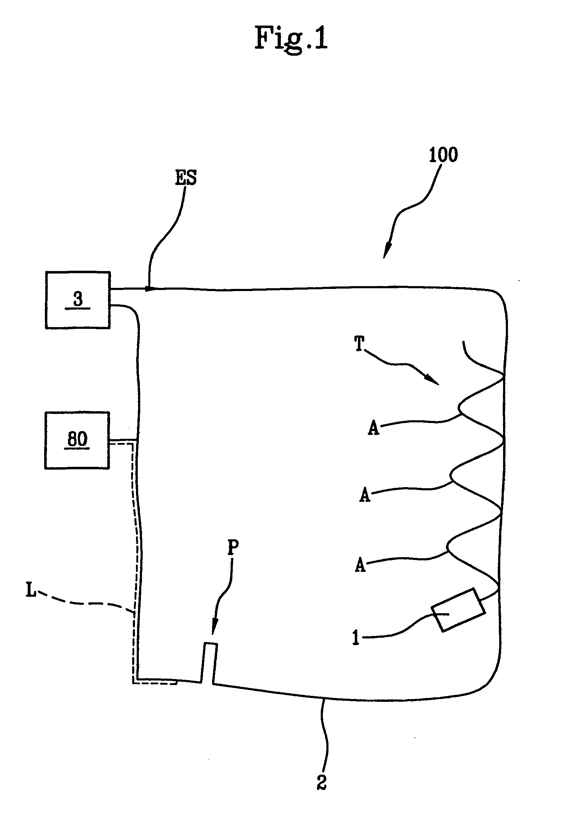

With reference to the accompanying drawings, an apparatus for grass cutting according to the invention has been generally identified by reference numeral 100. Apparatus 100 (Fig. 1) comprises a lawn mower 1, designed to operate at least inside one cutting area S, bounded by a perimetral cable 2.

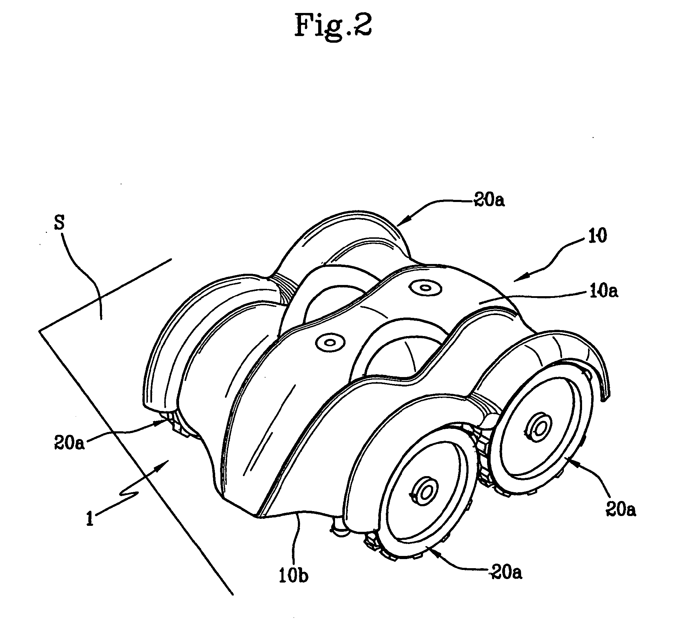

The lawn mower 1 (Figs. 2-3) first of all comprises a frame 10; the frame 10 may for example comprise an upper body 10a and a lower body 10b, preferably associated with each other in a removable manner. The upper body 10a and lower body 10b can be made of plastic material, for example.

The lawn mower 1 further comprises actuating means 20 mounted on frame 10 to move the lawn mower 1 relative to the cutting area S; the latter can be a lawn, a garden, a flowerbed, or generally any surface on which the lawn mower 1 has to operate.

The actuating means 20 preferably comprises a plurality of wheels 20a, mounted on frame 10, and one or more motors, designed to drive said wheels 20a in rotation. By way of example, the lawn mower 1 shown in the drawings is provided with four wheels 20a, suitably powered.

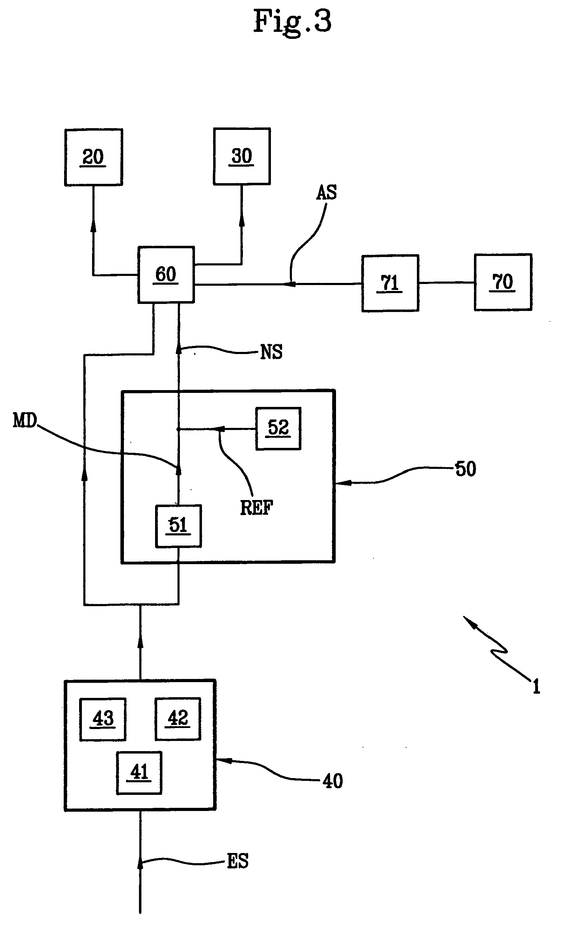

The lawn mower 1 further comprises one or more blades 30 (diagrammatically shown in Fig. 3), mounted on frame 10 for cutting the grass present in the cutting area S. Advantageously blades 30 are moved by suitable motors housed within frame 10.

By way of example, said motors can be electric motors powered by a battery; the latter can be of the rechargeable type. Preferably, battery recharge taking place at a fixed station or recharge base, is obtained by an electric coupling, in particular of the inductive type. Preferably said battery can also power a control unit (to be described in the following) and other electric/electronic devices provided on board the lawn mower 1.

Apparatus 100 further comprises a management device 3 (Fig. 1) associated with said perimetral cable 2. The management device 3 is configured for outputting an electric signal ES. The management device 3 is connected to cable 2 in such a manner that the electric signal ES is propagated in the cable 1 itself. Preferably the perimetral cable 2 is an electric cable. The electric signal ES can have a sinusoidal wave form or it can be a square wave signal, etc.

Advantageously, the perimetral cable 2 comprises at least one portion P having a predetermined conformation. Preferably portion P has a concave conformation relative to the perimeter defined by the perimetral cable 2. In particular, portion P has a substantially U-shaped conformation, so as to form a sort of recess of the perimeter of the cutting area S facing the inside of the cutting area S itself.

In an embodiment, portion P can have a substantially squared conformation similar to that defined by three sides of a rectangle (two major sides and one minor side).

By way of example, the recessed depth or portion P inwardly of the cutting area S can be included between 1.5 m and 2.5 m.

By way of example, the thickness (i.e. the size of portion P determined in a direction perpendicular to the major extension of the portion P itself, or parallel to the cable part 2 immediately adjacent to portion P) can be included between 3 cm and 10 cm.

In general, the ratio between the depth and the thickness of portion P is preferably greater than 10, more preferably greater than 20, and most preferably greater than 30.

In a preferred embodiment, the ratio between the depth and the thickness of portion P can be the same as or greater than 40.

As better clarified in the following, portion P is useful because, when detected by the lawn mower 1, it enables the latter to adjust its behaviour accordingly. Advantageously, the lawn mower 1 comprises sensor means 40 for detecting the electric signal ES. In this manner, when the lawn mower 1 is in the vicinity of the perimetral cable 2, it is able to determine its position relative to said cable 2.

In an embodiment, the sensor means 40 can comprise a detecting element 41, preferably consisting of an inductive element, such as a coil for example. Preferably, the sensor means 40 further comprises a current reader 42 and, possibly, a current amplifier 43 aiming at allowing better reading of the detected signal.

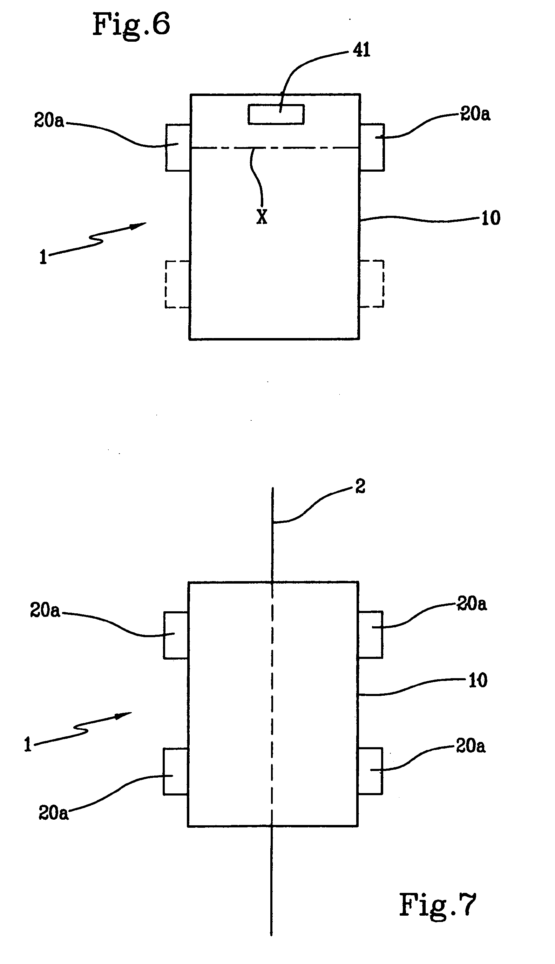

Preferably, the detecting element 41 is mounted on frame 10 at a forward position thereof. In particular, the detecting element can be advantageously positioned at the front, relative to an axis X that ideally or also mechanically joins the front wheels of the lawn mower (Fig. 6).

The lawn mower 1 further comprises a control unit 60 associated with the sensor means 40 and configured for operating the actuating means 20 in such a manner as to move the lawn mower 1 inside the cutting area S along a trajectory T; this trajectory comprises a plurality of arcs A, each of which has its ends substantially lying close to cable 2. As diagrammatically shown in Fig. 1, the concavities of arcs A face the perimetral cable 2. Preferably, arcs A are substantially consecutive and adjacent, substantially only separated by the stretch the lawn mower 1 needs for modifying its advance direction.

In greater detail, the control unit 60 operates as follows to make the lawn mower 1 follow said trajectory T:
- following detection of the electric signal ES by the sensor means 40, a command is given to the actuating means 20 for steering in a first direction, to the right for example;
- after a travel of a given length, a command is given to the actuating means 20 for steering in a second direction opposite to the first one, to the left for example, so as to meet cable 2 again.

In other words, trajectory T is obtained by causing the lawn mower 1, when it meets cable 2, to always steer in the same direction (to the right, for example, as said - Fig. 3a) and cover a given length, in such a manner as to describe the first part of an arc; subsequently steering in the opposite direction is carried out (to the left, for example, as said - Fig. 3b), so as to describe the second part of an arc and come to a position meeting cable 2 again.

When the sensor means 40 again detects the vicinity of cable 2, the control unit 60 recommences the sequence of the above described command steps.

It should be noted that the above example in which the first direction is coincident with the right and the second direction is coincident with the left is only given by way of example: the system can operate in the same manner if reference is made to the left for the first direction and to the right for the second direction.

For the sake of clarity the operating mode of the control unit 60, in which the latter controls the actuating means 20 in such a manner as to follow the aforesaid trajectory T will be identified as "auxiliary operating condition".

It should be noted that the arc trajectory is advantageous because it allows the lawn mower to keep the perimetral cable as the reference without however exactly following the same trajectory each time it has, for instance, to go back to the recharge base. In this manner, while enabling the lawn mower to reach the recharge base, the tracks left by the wheels of the lawn mower are prevented from spoiling the regions adjacent to the perimetral cable.

As better clarified in the following, an advantageous aspect of the present invention concerns the possibility of easily reaching the recharge base although employing an arc trajectory.

Conveniently, the lawn mower 1 further comprises an operating module 50 associated with the sensor means 40 and the control unit 60.

The operating module 50 is designed to determine, as a function of the electric signal ES propagating in portion P, main data MD representative of the conformation of portion P. In particular, the operating module 50 can comprise a positioning circuit 51 connected to the sensor means 40 and configured for determining the position of said detecting element 41 relative to the cutting area S, during movement of the lawn mower 1.

Practically, the positioning circuit 51, depending on detection of the electric signal ES by the detecting element 41, is able to determine whether the latter is inside or outside the cutting area S.

There are different techniques, known in the field, enabling this operation to be performed. By way of example, the technique described in the European Patent Application No. 05425466.9 in the name of the same Applicant can be taken into account. At all events, it should be remembered that within the scope of the present invention, different techniques can be also utilised.

In any case, since those skilled in the art are well acquainted with this type of detections and processing operations, further details will not be given as regards this matter.

The aforesaid main data MD can therefore be determined as a function of a plurality of successive positions of the detecting element 41 relative to the perimetral cable 2 during movement of the lawn mower 1. Practically, the main data MD can comprise first data representative of the fact that the detecting element 41 is within the cutting area S, and second data representative of the fact that the detecting element 41 is outside the cutting area S.

Portion P has such a conformation that it can be easily identified through a succession of data of the "inside/outside" type referred to the detecting element 41.

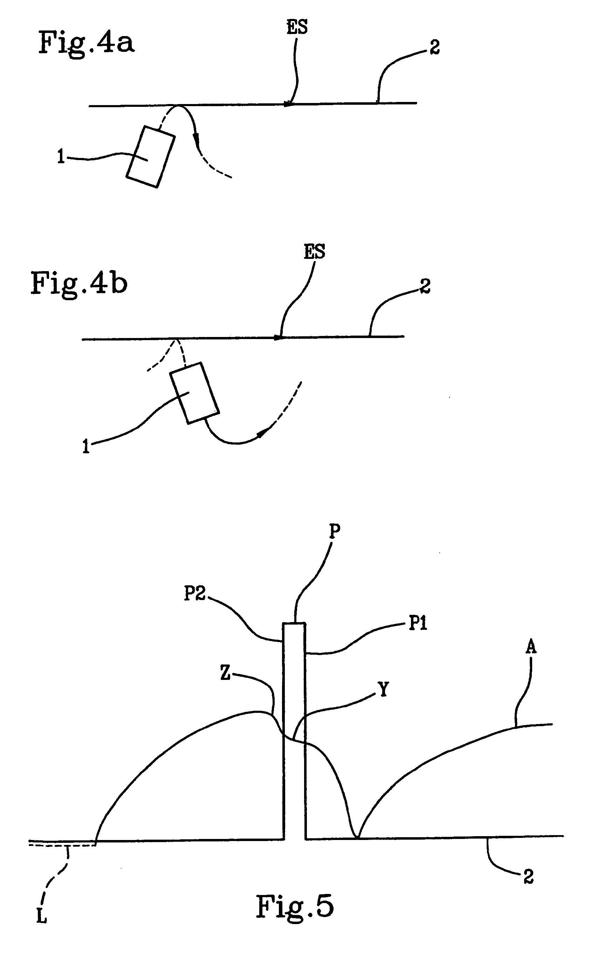

In this connection, reference is to be made to the example diagrammatically shown in Fig. 5: the control unit 60 is acting in the auxiliary operating condition and therefore the lawn mower 1 is following the arc trajectory T. When the detecting element 41 comes close to portion P, it detects the electric signal ES. At this stage, the lawn mower 1 (and in particular the operating module 50) does not yet know that it is in correspondence with portion P. Therefore the lawn mower 1 behaves itself as all times it meets the perimetral cable 2: the control unit 60 gives the actuating means 20 a command for steering to the right and starting a new arc (stretch Y in Fig. 5). While getting over this curve, the detecting element 41 initially is outside the cutting area S, i.e. it is beyond the first stretch P1 of portion P. Immediately afterwards, the same detecting element 41 also passes the second stretch P2 of portion P, and is therefore again inside the cutting area S. In this situation it is not to be ignored that portion P has a narrow and depth conformation and therefore the internal/external position of the detecting element 41 changes rather quickly.

The positioning circuit 51 provides data representative of the position of the detecting element 41 in a substantially continuous manner (i.e., preferably, with a predetermined frequency); thus the main data MD are to be considered representative of the conformation of portion P of the perimetral cable 2 and, depending on these data, it is therefore possible to determine the presence of portion P.

In greater detail, the operating module 50 is configured for comparing the main data MD with the prestored reference data Ref; the reference data Ref, stored in a suitable storage register 52, are representative of a reference conformation. Practically, the reference data Ref are representative of the conformation of portion P, previously stored in the lawn mower 1, so that said lawn mower, and in particular the operating module 50, can recognise it when it is detected through the sensor means 40.

By way of example, the reference data Ref can comprise, in the order, data representative of the fact that the detecting element 41 is outside the cutting area S along a first travel, and data representative of the fact that the detecting element 31 is inside the cutting area S along a second travel following the first one.

In an embodiment, detection by the detecting means 40 can be a discrete detection carried out at a given frequency (e.g. once every 0.1 seconds). Therefore, within the reference data Ref, data representative of the fact that the detecting element 41 is inside the cutting area S can consist of a given number of discrete detections carried out in this way (for instance 20 detections). Likewise, data representative of the fact that the detecting element 41 is then outside the cutting area S can consist of a given number of detections carried out in this way (for instance, five detections).

When the operating module 50 establishes that there is a substantial correspondence between the main data MD and the reference data Ref, it generates a notification signal NS. Therefore the notification signal NS is an indication of the fact that the lawn mower 1 is in correspondence with portion P of the perimetral cable 2.

The notification signal NS is addressed to the control unit 60. The control unit 60 that was operating in its auxiliary operating condition stops this operating modality and switches its way of operating into a main operating condition.

In this main operating condition the control unit sends a command to the actuating means 20 in such a manner that the lawn mower 1 moves to meet again cable 2 and then moves to follow cable 2 over a predetermined length L.

It is to be noticed that, after detecting portion P, the lawn mower 1 is in this situation: the detecting element 41 has passed the first stretch P1 and has then passed the second stretch P2. The detecting element is therefore inside the cutting area S, after leaving portion P behind it.

As said, the control unit 60 moves the lawn mower 1 in such a manner that the latter meets cable 2 again. To this aim, the control unit 60 preferably operates the actuating means 20 in such a manner that steering in said second direction occurs for meeting the perimetral cable 2 again. Referring to the example in Fig. 5, the lawn mower 1 is caused to steer to the left thus describing stretch Z.

Necessarily, following this operation the lawn mower 1, and in particular the detecting element 41, is again in the vicinity of the perimetral cable 2. At this point, the control unit 60 operates the actuating means 20 in such a manner that the lawn mower 1 follows cable 2 along said length L.

By way of example, length L can be included between 6 m and 12 m.

Note that in the present context and in the following claims, the expression "to follow the perimetral cable" preferably means "to move in a manner substantially parallel to and preferably substantially astride said perimetral cable".

The expression "astride" merely means that the lawn mower takes such a position that it has at least two wheel on one side and at least two wheels on the opposite side relative to the same stretch of the perimetral cable (which situation is diagrammatically shown in Fig. 7).

Length L can extend along cable 2 for guiding the lawn mower to a recharge base in which the lawn mower battery can be recharged.

In fact apparatus 100 can comprise a recharge base 80 for the lawn mower 1. The recharge base 80 is positioned along the perimetral cable 2 to a distance D from portion P measured along cable 2. Preferably distance D is smaller than or equal to said predetermined length L, so that the lawn mower 1 can reach the recharge base 80 following the stretch of length L.

As mentioned above, the lawn mower 1 preferably comprises a powering unit 70 such as a battery or a battery pack. The powering unit 70 has the task of supplying electric energy to the electric-electronic-electromechanical devices present on board the lawn mower 1.

Preferably the lawn mower 1 further comprises a monitoring circuit 71 for monitoring the powering unit 70 and generate an alert signal S when the powering unit 70 charge goes under a predetermined threshold. The alert signal AS is sent to the control unit 60 so that the latter starts operating in the auxiliary operating condition.

Practically, the lawn mower 1 normally moves inside the cutting area S following a trajectory dictated by a predetermined movement algorithm (a random, spiral algorithm, etc.).

When the monitoring circuit 71 generates the alert signal AS, the control unit 60 starts operating in said auxiliary operating condition, i.e. as soon as it meets the perimetral cable 2, it starts moving the lawn mower 1 according to the arc trajectory T.

Then, when following the arc movement the lawn mower 1 meets portion P, the control unit 60 further modifies its operating mode, operating in the main operating condition and causing the lawn mower 1 to follow cable 2 over the stretch of length L, so as to reach the recharge base 80.

A portion P is also provided to be positioned in front of narrow or arduous passages, so that the lawn mower 1, following the respective length L along the perimetral cable, is prevented from losing time while trying to cross that passage through an arc trajectory. In an embodiment, the control unit 60 is provided with a time counter (not shown): if, after activation of the auxiliary operating condition, the lawn mower does not meet portion P in a given time, the control unit makes the lawn mower start to directly follow the perimetral cable, so as to ensure return to the base at all events.

It is also to be noted that the control unit 60 can comprise a suitable measurement module (not shown) associated with the lawn mower wheels and preferably with an encoder connected to said wheels, so that the distances covered by the lawn mower can be measured. This feature can be useful both when the lawn mower must follow the perimetral cable over said stretch of length L, and when the lawn mower must follow the arc trajectory T.

Note that the operating module 50 and control unit 60, together with the related sub-modules, have been described separately for the only purpose of clarifying the functional features of the invention in the best manner. The operating module 50 and the control unit 60 in actual fact can be made using a single electronic device, such as a processor or microprocessor, suitably programmed for performing the described and claimed operations. Advantageously, the monitoring circuit 71 too can be implemented by said processor or microprocessor.

The invention achieves important advantages.

A first advantage resides in that, due to the apparatus of the invention, the lawn mower is able to move with agility along particularly narrow and difficult passages.

Another advantage is represented by its ability to go back to the recharge base in a quick and reliable manner.

Another advantage consists in minimising the effect of the tracks left by the lawn mower during its coming back to the recharge base.

A further advantage resides in that the lawn mower is able to follow a predetermined trajectory in a reliable manner even when a going portion and a return portion of the perimetral cable are in the vicinity of each other.

A still further advantage is found in the fact that the perimetral cable can be set with greater freedom and flexibility as compared with the known art apparatus, the sizes and shape of the cutting area being the same. A still further advantage is represented by the fact that the motor wear is reduced and, in general, there is also a reduction in the energy consumption for actuation of the lawn mower.

Moreover, there is advantageously an improvement in the lawn mower behaviour in the presence of steep slopes.

## Claims

1. An apparatus for cutting grass, comprising:
- a lawn mower (1) provided with: actuating means (20) for movement of said lawn mower (1) at least inside a cutting area (S); one or more blades (30) for cutting grass in said cutting area (S);
- a perimetral cable (2) confining said cutting area (S) and comprising at least one portion (P) having a predetermined conformation;
- a management device (3) for generating an electric signal (ES) and propagating it in said cable (2);
said lawn mower (1) being further provided with:
- sensor means (40) for detecting said electric signal (ES)
- a control unit (60) associated with said sensor means (40) and configured for operating said actuating means (20) in such a manner as to move said lawn mower (1) inside said cutting area (S) along a trajectory (T) substantially in the form of arcs (A), each arc (A) having its ends substantially lying close to said cable (2) and its concavity facing said cable (2);
- an operating module (50) associated with said sensor means (40) and said control unit (60), and configured for:
• determining main data (MD) representative of the conformation of said portion (P) of the cable (2), as a function of said electric signal (ES) propagating in said portion (P);
• comparing said main data (MD) with prestored reference data (Ref) representative of a reference conformation;
• generating a notification signal (NS) in case of correspondence between said main data (MD) and reference data (Ref);
said control unit (60) being further configured for:
• receiving said notification signal (NS);
• following said reception, operating in a main operating condition giving commands to said actuating means (20) in such a manner that said lawn mower (1) will move for meeting said cable (2) again and will then move along said cable (2) over a predetermined length (L).

2. An apparatus as claimed in claim 1, wherein said portion (P) has a concave conformation relative to the perimeter defined by said cable (2).

3. An apparatus as claimed in anyone of the preceding claims, wherein said control unit (60) operates at least in one auxiliary operating condition for defining said trajectory (T), in which it gives commands to said actuating means (20) as follows:
- following detection of said electric signal (ES) by said sensor means (40), a steering command in a first direction is given, to the right for example;
- after a travel of a given length, a steering command in a second direction opposite to said first direction is given, to the left for example, so that said cable (2) is met again.

4. An apparatus as claimed in claim 3, wherein said control unit (60) operates in said main operating condition stopping operation in the auxiliary operating condition.

5. An apparatus as claimed in claim 3 or 4, wherein said control unit (60) in said main operating condition operates said actuating means (20) so as to carry out steering in said second direction for meeting said perimetral cable (2) again.

6. An apparatus as claimed in anyone of the preceding claims, wherein said lawn mower (1) further comprises:
- a powering unit (70);
- a monitoring circuit (71) for monitoring said powering unit (70) and generating an alert signal (AS) when the charge in said powering unit (70) goes below a predetermined threshold;
- said control unit (60) being associated with said monitoring circuit (71) for operating in said auxiliary operating condition following generation of said alert signal (AS).

7. An apparatus as claimed in anyone of the preceding claims, wherein said sensor means (40) comprises a detecting element (41) adapted to receive said electric signal (ES), said main data (MD) being determined as a function of a plurality of successive positions of said detecting element (41) relative to said perimetral cable (2) during movement of said lawn mower (1).

8. An apparatus as claimed in claim 7, wherein said operating module (50) comprises a positioning circuit (51) connected to said sensor means (40) and configured for determining the position of said detecting element (41) relative to said cutting area (S), along the movement of said lawn mower (1),
said main data (MD) comprising first data representative of the fact that said detecting element (41) is inside the cutting area (S), and second data representative of the fact that said detecting element (41) is outside said cutting area (S).

9. An apparatus as claimed in claim 8, wherein said reference data (Ref) comprise, in the order, data representative of the fact that said detecting element (41) is outside said cutting area (S) over a first travel or path, and data representative of the fact that said detecting element (41) is inside said cutting area (S) over a second travel or path.

10. An apparatus as claimed in anyone of the preceding claims, further comprising a recharge base (80) for said lawn mower (1), which base is positioned along said perimetral cable (2) to a distance (D) from said portion (P), measured along said cable (2), that is smaller than or equal to said predetermined length (L).

## Patentansprüche

1. Vorrichtung zum Schneiden von Gras, umfassend:
- einen Rasenmäher (1), versehen mit: Betätigungsmitteln (20) für die Bewegung des Rasenmähers (1) mindestens in einem Schneidbereich (S), ein oder mehrere Messer (3) zum Schneiden von Gras in diesem Schneidbereich (S);
- ein Umfangskabel (2), das den Schneidbereich (S) abgrenzt und mindestens einen Abschnitt (P) mit einer vorgegebenen Beschaffenheit umfasst;
- eine Handhabungseinrichtung (3) zum Erzeugen eines elektrischen Signals (ES) und zu dessen Verbreitung im Kabel (2), wobei der Rasenmäher (1) außerdem versehen ist mit:
- Sensormitteln (40) zum Erfassen des elektrischen Signals (ES);
- einer Steuereinheit (60), verbunden mit den Sensormitteln (40) und eingerichtet für die Betätigung der Betätigungsmittel (20), sodass der Rasenmäher (1) im Schneidbereich (S) entlang einer Bewegungsbahn (T) bewegt wird, die im Wesentlichen die Form von Bögen (A) aufweist, wobei die Enden jedes Bogens (A) im Wesentlichen nah am Kabel (2) angeordnet sind und sein Hohlraum dem Kabel (2) gegenüberliegend angeordnet ist;
- einem Betriebsmodul (50), verbunden mit den Sensormitteln (40) und der Steuereinheit (60), und eingerichtet für:
- das Ermitteln von Hauptdaten (MD), die repräsentativ für die Beschaffenheit des Abschnitts (P) des Kabels (2) sind, als eine Funktion des elektrischen Signals (ES), das im Abschnitt (P) verbreitet wird;
- das Vergleichen dieser Hauptdaten (MD) mit zuvor gespeicherten Referenzdaten (Ref), die repräsentativ für eine Referenzbeschaffenheit sind;
- das Generieren eines Meldesignals (NS) bei Übereinstimmung zwischen den Hauptdaten (MD) und den Referenzdaten (Ref);
wobei die Steuereinheit (60) außerdem eingerichtet ist für:
- das Empfangen des Meldesignals (NS);
- den Betrieb in einem Hauptbetriebsmodus infolge dieses Empfangs, indem den Betätigungsmitteln (20) Befehle übermittelt werden, sodass der Rasenmäher (1) sich bewegt, um erneut auf das Kabel (2) zu treffen und sich dann entlang dieses Kabels (2) über eine vorgegebene Länge (L) bewegt.

2. Vorrichtung nach Anspruch 1, wobei der Abschnitt (P) eine hohle Beschaffenheit relativ zum vom Kabel (2) definierten Umfang aufweist.

3. Vorrichtung nach einem der vorhergehenden Ansprüche, wobei die Steuereinheit (60) mindestens in einem Hilfsbetriebsmodus arbeitet, um die Bewegungsbahn (T) zu definieren, in dem sie den Betätigungsmitteln (20) wie folgt Befehle übermittelt:
- der Erfassung des elektrischen Signals (ES) durch die Sensormittel (40) folgend, wird ein Lenkungsbefehl in eine erste Richtung, zum Beispiel nach rechts, übermittelt;
- nach einem Fahrweg einer bestimmten Länge wird ein Lenkungsbefehl in eine zweite Richtung übermittelt, die der ersten Richtung entgegengesetzt ist, zum Beispiel nach links, sodass wieder auf das Kabel (2) getroffen wird.

4. Vorrichtung nach Anspruch 3, wobei die Steuereinheit (60) im Hauptbetriebsmodus arbeitet und den Betrieb im Hilfsbetriebsmodus stoppt.

5. Vorrichtung nach Anspruch 3 oder 4, wobei die Steuereinheit (60) die Betätigungsmittel (20) im Hauptbetriebsmodus betätigt, sodass eine Lenkung in die zweite Richtung durchgeführt wird, um erneut auf das Umfangskabel (2) zu treffen.

6. Vorrichtung nach einem der vorhergehenden Ansprüche, wobei der Rasenmäher (1) außerdem umfasst:- eine Versorgungseinheit (70);
- einen Überwachungskreis (71) zum Überwachen der Versorgungseinheit (70) und zum Generieren eines Warnsignals (AS), wenn die Ladung in der Versorgungseinheit (70) unter eine vorgegebene Schwelle sinkt;
wobei die Steuereinheit (60) außerdem mit dem Überwachungskreis (71) verbunden ist, um im Hilfsbetriebsmodus der Generierung des Warnsignals (AS) folgend zu arbeiten.

7. Vorrichtung nach einem der vorhergehenden Ansprüche, wobei die Sensormittel (40) ein Erfassungselement (41) umfassen, das ausgelegt ist, um das elektrische Signal (ES) zu empfangen, wobei die Hauptdaten (MD) als eine Funktion einer Vielzahl von aufeinanderfolgenden Positionen des Erfassungselements (41) relativ zum Umfangskabel (2) während der Bewegung des Rasenmähers (1) ermittelt werden.

8. Vorrichtung nach Anspruch 7, wobei das Betriebsmodul (50) einen Positionierungskreis (51) umfasst, verbunden mit den Sensormitteln (40) und eingerichtet, um die Position des Erfassungselements (41) relativ zum Schneidbereich (S) entlang der Bewegung des Rasenmähers (1) zu ermitteln, wobei die Hauptdaten (MD) erste Daten umfassen, die repräsentativ für die Tatsache sind, dass sich das Erfassungselement (41) innerhalb des Schneidbereichs (S) befindet, und zweite Daten, die repräsentativ für die Tatsache sind, dass sich das Erfassungselement (41) außerhalb des Schneidbereichs (S) befindet.

9. Vorrichtung nach Anspruch 8, wobei die Referenzdaten (Ref) der Reihenfolge nach Daten umfassen, die repräsentativ für die Tatsache sind, dass sich das Erfassungselement (41) über eine erste Fahrbahn oder einen ersten Weg außerhalb des Schneidbereichs (S) befindet, und Daten, die repräsentativ für die Tatsache sind, dass sich das Erfassungselement (41) über eine zweite Fahrbahn oder einen zweiten Weg innerhalb des Schneidbereichs (S) befindet.

10. Vorrichtung nach einem der vorhergehenden Ansprüche, zudem umfassend eine Ladestation (80) für den Rasenmäher (1), die entlang des Umfangskabels (2) in einem Abstand (D) vom Abschnitt (P), gemessen entlang des Kabels (2), positioniert ist, der kleiner oder gleich der vorgegebenen Länge (L) ist.

## Revendications

1. Appareil servant à couper l'herbe, comprenant :
- une tondeuse à gazon (1) équipée : de moyens d'actionnement (20) assurant le mouvement de ladite tondeuse à gazon (1) au moins à l'intérieur d'une zone de coupe (S) ; d'une ou plusieurs lames (30) pour couper l'herbe dans ladite zone de coupe (S) ;
- un câble périmétral (2) délimitant ladite zone de coupe (S) et comprenant au moins une partie (P) ayant une configuration prédéterminée ;
- un dispositif de gestion (3) permettant de générer un signal électrique (ES) et de le propager dans ledit câble (2) ; ladite tondeuse à gazon (1) étant pourvue de plus :
- de moyens de détection (40) afin de détecter ledit signal électrique (ES)
- d'une unité de commande (60) associée auxdits moyens de détection (40) et configurée pour faire fonctionner lesdits moyens d'actionnement (20) de sorte à déplacer ladite tondeuse à gazon (1) à l'intérieur de ladite zone de coupe (S) le long d'une trajectoire (T) substantiellement en forme d'arcs (A), chaque arc (A) ayant ses extrémités substantiellement situées à proximité dudit câble (2) et ses concavités face au dit câble (2) ;
- d'un module de fonctionnement (50) associé auxdits moyens de détection (40) et à ladite unité de commande (60), et configuré pour :
• déterminer des données principales (MD) représentatives de la configuration de ladite partie (P) du câble (2), en fonction dudit signal électrique (ES) se propageant dans ladite partie (P) ;
• comparer lesdites données principales (MD) avec des données de référence déjà mémorisées (Ref) représentatives d'une configuration de référence ;
• générer un signal de notification (NS) en cas de correspondance entre lesdites données principales (MD) et les données de référence (Ref) ;
ladite unité de commande (60) étant de plus configurée pour :
• recevoir ledit signal de notification (NS) ;
• suite à ladite réception, fonctionner dans une condition de fonctionnement principale en donnant des instructions auxdits moyens d'actionnement (20) de sorte que ladite tondeuse à gazon (1) puisse se déplacer pour croiser ledit câble (2) à nouveau et puisse alors se déplacer le long dudit câble (2) sur une longueur prédéterminée (L).

2. Appareil selon la revendication 1, dans lequel ladite partie (P) a une configuration concave par rapport au périmètre défini par ledit câble (2).

3. Appareil selon l'une quelconque des revendications précédentes, dans lequel ladite unité de commande (60) fonctionne au moins dans une condition de fonctionnement auxiliaire pour définir ladite trajectoire (T) dans laquelle elle donne des instructions auxdits moyens d'actionnement (20) comme suait :
- suite à la détection dudit signal électrique (ES) par lesdits moyens de détection (40), une instruction d'orientation dans une première direction est donnée, sur la droite par exemple ;
- après un trajet d'une longueur donnée, une instruction d'orientation dans une seconde direction opposée à ladite première direction est donnée, sur la gauche par exemple, de sorte à croiser ledit câble (2) à nouveau.

4. Appareil selon la revendication 3, dans lequel ladite unité de commande {60) fonctionne dans ladite condition de fonctionnement principale en arrêtant le fonctionnement dans la condition de fonctionnement auxiliaire.

5. Appareil selon les revendications 3 ou 4, dans lequel ladite unité de commande (60) dans ladite condition de fonctionnement principale fait fonctionner lesdits moyens d'actionnement (20) de sorte à effectuer l'orientation dans ladite seconde direction pour croiser à nouveau ledit câble périmétral (2).

6. Appareil selon l'une quelconque des revendications précédentes, dans lequel ladite tondeuse à gazon (1) comprend de plus : - un bloc d'alimentation (70) ;
- un circuit de contrôle (71) pour contrôler ledit bloc d'alimentation (70) et générer un signal d'alerte (AS) lorsque la charge contenue dans ledit bloc d'alimentation (70) se retrouve en-dessous d'un seuil déterminé ;
- ladite unité de commande (60) étant associée au dit circuit de contrôle (71) pour fonctionner dans ladite condition de fonctionnement auxiliaire suite à la génération dudit signal d'alerte (AS).

7. Appareil selon l'une quelconque des revendications précédentes, dans lequel lesdits moyens de détection (40) comprennent un élément de détection (41) pouvant recevoir ledit signal électrique (ES), lesdites données principales (MD) étant déterminées en fonction d'une pluralité de positions successives dudit élément de détection (41) par rapport au dit câble périmétral (2) lors du déplacement de ladite tondeuse à gazon (1).

8. Appareil selon la revendication 7, dans lequel ledit module de fonctionnement (50) comprend un circuit de positionnement (51) relié auxdits moyens de détection (40) et configuré pour déterminer la position dudit élément de détection (41) par rapport à ladite zone de coupe (S), le long du déplacement de ladite tondeuse à gazon (1), lesdites données principales (MD) comprenant des premières données représentatives du fait que ledit élément de détection (41) se trouve à l'intérieur de la zone de coupe (S), et des secondes données représentatives du fait que ledit élément de détection (41) se trouve à l'extérieur de la zone de coupe (S).

9. Appareil selon la revendication 8, dans lequel lesdites données de référence (Ref) comprennent, dans l'ordre, des données représentatives du fait que ledit élément de détection (41) se trouve à l'extérieur de ladite zone de coupe (S) au cours d'un premier trajet ou parcours, et des données représentatives du fait que ledit élément de détection (41) se trouve à l'intérieur de ladite zone de coupe (S) au cours d'un second trajet ou parcours.

10. Appareil selon l'une quelconque des revendications précédentes, comprenant de plus une base de recharge (80) pour ladite tondeuse à gazon (1), ladite base étant positionnée le long dudit câble périmétral (2) à une distance (D) de ladite partie (P), mesurée le long dudit câble (2), étant plus petite ou égale à ladite longueur prédéterminée (L).
